# EUROPÄISCHE PATENTSCHRIFT

(11) **EP 3 342 010 B1**
(45) Veröffentlichungstag und Bekanntmachung des Hinweises auf die Patenterteilung: **29.05.2019**
(21) Anmeldenummer: 16763205.8
(22) Anmeldetag: 18.08.2016
(51) Int. Cl.: H01S 3/08, H01S 3/02, H01S 3/04, H01S 3/042, H01S 3/06

(54) **VERSPANNUNGSOPTIMIERTES LASERSCHEIBENTRÄGERSYSTEM**
STRESS-OPTIMIZED LASER DISK CARRIER SYSTEM
SYSTÈME DE SUPPORT DE TRANCHE LASER OPTIMISÉ VIS-À-VIS DES DÉFORMATIONS

(30) Priorität: 27.08.2015 DE 102015114263
(43) Veröffentlichungstag der Anmeldung: 04.07.2018
(73) Patentinhaber: TRUMPF Laser GmbH, 78713 Schramberg (DE)
(72) Erfinder: GRAF, Markus, 78112 St. Georgen (DE); KILLI, Alexander, 78647 Trossingen (DE); KUHN, Vincent, 77761 Schiltach (DE); SCHAD, Sven-Silvius, 78628 Rottweil (DE)
(74) Vertreter: Kramer Barske Schmidtchen Patentanwälte PartG mbB
(86) Internationale Anmeldenummer: PCT/EP2016/069585
(87) Internationale Veröffentlichungsnummer: WO 2017/032681

(56) Entgegenhaltungen:
- WO-A2-2013/093503
- DE-A1- 10 219 004
- US-A- 3 601 343
- US-A1- 2006 088 067
- LIAO Y ET AL: "PRESSURE TUNING OF THERMAL LENSING FOR HIGH-POWER SCALING", OPTICS LETTERS, OPTICAL SOCIETY OF AMERICA, US, Bd. 24, Nr. 19, 1. Oktober 1999 (1999-10-01), Seiten 1343-1345, XP000873636, ISSN: 0146-9592

## Beschreibung

Die vorliegende Erfindung betrifft Scheibenlasersysteme und insbesondere einen Laserscheibenträger zum spannungsoptimierten Halten eines Laserscheibenmoduls.

Die Verwendung von plattenförmigen laseraktiven Medien (im Folgenden auch als Laserscheiben bezeichnet) in Festköperlaseranordnungen ist bekannt. Beispielhafte Festkörperlaseranordnungen sind aus DE 10 2012 214 970 A1 und EP 1 677 394 Albekannt. Laserscheiben können insbesondere in Form einer runden Scheibe ausgebildet sein. Ferner ist es bekannt, derartige Laserscheiben durch z.B. Kleben, Bonden oder Löten auf Wärmesenken wie z.B. Diamantwärmesenken zu befestigen, wie es beispielsweise aus der EP 1 178 579 A2 bekannt ist. Die Kombination aus Laserscheibe und Wärmesenke wird hierin als Scheibenmodul und ein entsprechendes Lasersystem als Scheibenlaser bezeichnet.

Scheibenmodule werden üblicherweise zur Kühlung in einem sogenannten Kühlfinger gehalten. Beispielsweise kann ein Scheibenmodul mit drei Auflagepunkten auf einer Frontseite des Wärmemediums für eine definierte Lage eingespannt werden. Eine beispielhafte Drei-Punkt-Auflage zur Klemmung eines Lasermoduls ist aus DE 100 61 424 A1 bekannt, bei der ein Haltering durch eine Spannvorrichtung beaufschlagt wird, die eine Kraft in Richtung Kühlgehäuse des Kühlfingers erzeugt. Im Laserbetrieb können mechanische und thermische Belastungen der Wärmesenke zu Verspannungen und daraus resultierende Verformungen der Laserscheibe führen, wodurch sich eine Limitierung der erreichbaren Laserleistung ergeben kann.

Ferner ist aus der DE 199 39 774 A1 eine Laserscheibenkühlung bekannt, bei der ein transparenter Stützkörper mittels eines Ringflansches gegen die Stirnseite einer Kühlkammerwand gepresst wird. Es ergibt sich so eine lückenlose Verbindung zwischen Laserscheibe und Kühlkammer. Auf den Stützkörper wirken dabei im Wesentlichen mechanische Kräfte in Richtung der Kräfte, die durch den Temperaturgradienten ausgelöst werden.

Ferner offenbart US 2006/088067 A1 ein Kühlsystem zur Verwendung mit einem durchlässigen optischen Element eines Lasers. Das System umfasst mindestens ein optisch durchlässiges Element, insbesondere ein aktives Medium zur optischen Verstärkung, das durch einen Differenzdruck in Wärmekontakt mit einem transparenten Wärmeleitkörper gehalten wird. Der Umriss des transparenten Wärmeleitkörpers kann kreisförmig ausgebildet sein. Zumindest einige Teile des Rands des transparenten Wärmeleitkörpers sind an einer Wärmesenke befestigt, die für den transparenten Wärmeleitkörper sowohl mechanische Unterstützung als auf Wärmeabfuhr bereitstellt.

Einem Aspekt dieser Offenbarung liegt die Aufgabe zugrunde, nachteilige Auswirkungen von Verspannungen im Scheibenmodul (und daraus resultierender nicht-sphärischer Verformungen insbesondere in der Laserscheibe zu reduzieren. Insbesondere ist es eine Aufgabe, während des Betriebs und unter den entsprechenden thermischen Rahmenbedingungen den Einfluss von Verformungen des Scheibenmoduls und insbesondere der Laserscheibe auf den Laserbetrieb und insbesondere auf die auskoppelbare Leistung gering zu halten.

Zumindest eine dieser Aufgaben wird durch ein Laserscheibenträgersystem nach Anspruch 1 und einen Kühlfinger nach Anspruch 14 gelöst. Weiterbildungen sind in den Unteransprüchen angegeben.

In einem Aspekt weist ein Laserscheibenträgersystem ein Scheibenmodul auf, das eine rundscheibenförmige Wärmesenke mit einer Vorderseite, einer Rückseite und einer die Vorderseite und die Rückseite verbindenden Randfläche sowie eine auf der Vorderseite der Wärmesenke angeordnete Laserscheibe aufweist. Ferner weist das Laserscheibenträgersystem eine Radialhalterungsvorrichtung mit einer Öffnung zur Aufnahme des Scheibenmoduls auf, wobei die Krafteinwirkung der Radialhalterungsvorrichtung in radialer Richtung auf die Randfläche erfolgt. Die Radialhalterungsvorrichtung weist einen Spannzangenabschnitt auf, der eine Mehrzahl von Spannarmen aufweist. Die Spannarme erstrecken sich jeweils in einer axialen Richtung und sind zur Ausbildung einer radial nach innen gerichteten Klemmkraft an einem freien Klemmende ausgebildet.

In einem weiteren Aspekt weist ein Kühlfinger für ein Scheibenlasersystem einen Kühlfingergrundkörper und ein derartiges an dem Kühlfingergrundkörper befestigtes Laserscheibenträgersystem auf. Weiterer Aspekte umfassen ein Scheibenlasersystem mit einem Kühlfinger mit einem derartigen Laserscheibenträgersystem und ein Verfahren zum radialen Halten eines Scheibenmoduls.

In einigen Weiterbildungen weist die Radialhalterungsvorrichtung insbesondere eine hohlzylinderförmige Grundform auf. Die Mehrzahl von Spannarmen ist insbesondere an einem Ringabschnitt der Radialhalterungsvorrichtung angeordnet. Die Spannarme erstrecken sich jeweils, insbesondere von dem Ringabschnitt, in einer axialen Richtung und sind zur Ausbildung einer radial nach innen gerichteten Klemmkraft an einem oder an mehreren Klemmbereichen ausgebildet.

Gemäß den hierin vorgeschlagenen Konzepten wird die als Stützkörper der Laserscheibe dienende Wärmesenke radial verspannt, so dass mechanische Kräfte insbesondere im Wesentlichen senkrecht zu den thermischen Kräften zwischen Pumplaserseite und gekühlter Seite wirken.

In einigen Ausführungsformen erfolgt die Halterung des Scheibenmoduls im Wesentlichen unabhängig von axial wirkenden Kräften. Ein Beispiel für eine axiale Krafteinwirkung ist eine Abdichtung des Scheibenmoduls gegen einen Kühlfinger hinsichtlich eines Kühlstroms, wobei durch einen Dichtring rotationssymmetrisch Kräfte axial auf den Rand des Scheibenmoduls wirken.

Hierin werden Konzepte offenbart, dies es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine 3D-Ansicht eines ersten beispielhaften Kühlfingers mit einem radial geklemmten Scheibenmodul,
- Fig. 2: eine 3D-Schnittansicht eines zweiten beispielhaften Kühlfingers mit einem radial gelöteten Scheibenmodul,
- Fig. 3A und Fig. 3B: eine Perspektivansicht und eine Seitenansicht einer beispielhaften Ausführungsform eines Laserscheibenträgersystems zur radialen Klemmung eines Scheibenmoduls,
- Fig. 4: eine Vorderansicht eines Laserscheibenträgersystems mit einem radial geklemmten Scheibenmodul zur Verdeutlichung einer im Wesentlichen rein sphärischen Verformung,
- Fig. 5: eine Schnittansicht eines Laserscheibenträgersystems mit einem radialgeklemmten Scheibenmodul,
- Fig. 6A bis Fig. 6C: Schnittansichten von Klemmbereichen eines Laserscheibenträgersystems für Wärmesenken mit unterschiedlich ausgebildeten Randflächen,
- Fig. 7A und Fig. 7B: Schnittansichten eines Laserscheibenträgersystems mit einem radial gelöteten Scheibenmodul (mit steiferer Hülse zur besseren Übertragung axialer Kräfte z.B. durch den Kühlwasserdruck) und
- Fig. 8A und Fig. 8B: eine Schnittansicht und eine Vorderansicht eines Laserscheibenträgersystems mit einem radialgelöteten Scheibenmodul (mit eine weniger steifen Hülse, um die Kräfte, welche durch die unterschiedlichen Ausdehnungskoeffizienten von Wärmesenke und Hülse auf die Wärmesenke einwirken, zu reduzieren).

Hierin beschriebene Aspekte basieren zum Teil auf der Erkenntnis, dass bei Halterungen, die z.B. von vorne beispielsweise über die eingangs erwähnte Dreipunktverspannung auf ein Scheibenmodul einwirken, nicht sphärische Verformungen der sich auf der Laserseite des Scheibenmoduls befindenden Laserscheibe hervorgerufen werden können. Es wurde ferner erkannt, dass dadurch hervorgerufene nicht sphärische optische Effekte ein Umsortieren von Laserleistung in unerwünschte Moden des zugrunde liegenden Laserresonators erfolgen kann. Dies kann zu instabil laufenden Lasersystemen führen, aus denen beispielsweise trotz erhöhter Pumpleistung nicht entsprechend mehr oder sogar weniger Laserleistung ausgekoppelt werden kann. So wurde erkannt, dass sich eine dreizählige Symmetrie der Auflagepunkte in Verspannungen der Laserscheibe widerspiegeln kann, die zu einer nicht-sphärische Verformung der Laserscheibe und damit zu einer Limitierung der erreichbaren Laserleistung führen können.

So wurde allgemein erkannt, dass ein Halterungskonzept eines Scheibenmoduls möglichst geringe und bevorzugt keine nicht sphärischen Verformungen verursachen sollte. Insbesondere wurde erkannt, dass ein Halterungskonzept eines Scheibenmoduls wenn möglich nur zu einer sphärischen Verformung - ohne nicht sphärische Verbiegungskomponenten - führen sollte.

Mit Blick auf dieses Ziel wurde erkannt, dass Angriffspunkte der Befestigung des Scheibenmoduls auf der Randfläche der Wärmesenke beispielsweise über radiales Klemmen oder radiales Einlöten gewählt werden können. So wurde erkannt, dass in radial gehaltenen, insbesondere radial geklemmten und radial gefassten, Scheibenmodulen eine symmetrischere Kontaktherstellung mit der Wärmesenke erreicht werden kann, als dies bei einer Frontalanpressung möglich wäre. Im Vergleich zur frontalen Dreipunktverspannung erfolgt der Krafteintrag z.B. radial weiter außen und weiter hinten, d.h. von der Vorderseite der Wärmesenke entfernt. Somit ist der Weg von der Kontaktherstellung zur Mitte der Laserscheibe länger und führt durch das Innere der Wärmesenke hindurch. Dadurch kann eine hochsymmetrische Vorspannung, insbesondere eine sphärische Verformung, der Laserscheibe bewirkt werden, die die Modenausbildung im Scheibenlaser als "rotationssymmetrische Linse" weniger stark beeinflusst, als z.B. die eingangs erwähnten zylinderlinsenartigen Verformungen.

In anderen Worten, es wurde erkannt, dass sich insbesondere mit radial geklemmten oder radial verlöteten Scheibenträgern ein Halterungskonzept mit besserer sphärischer Formtreue unter Vermeidung der sonst auftretenden z.B. dreizähligen Symmetrie erreichen lassen kann.

Ferner ist allgemein eine sehr stabile Positionierung einer verspiegelten Laserscheibe als Teil eines Scheibenlaserresonators wichtig für eine Stabilität der Laserresonatorgeometrie und damit für einen stabilen Laserbetrieb. Eine sehr stabile Positionierung erlaubt es, eine Mikrowanderung der Laserscheibe/des Scheibenmoduls insbesondere bei thermischem Stress während des Betriebs oder bei mechanischem Stress während des Transports eines vormontierten Scheibenmoduls zu reduzieren und eventuell weitgehend zu verhindern. Beispielsweise ist die sehr stabile Positionierung bei einem gepulsten Betrieb eines Scheibenlasers von Vorteil, bei dem Wärmeeintragsschwankungen in der Wärmesenke aufgrund von An- und Ausschaltvorgängen auftreten und zu einem "Arbeiten" der Auflageflächen durch die thermische Belastungen führen könnten. In diesem Zusammenhang wurde ferner erkannt, dass auch radiale Halterungskonzepte sehr stabile Positionierungen, insbesondere über eine spezielle Formgebung der Randfläche sowie Kombinationen von Befestigungsmöglichkeiten, erlauben.

In den folgenden Ausführungsbeispielen sind beispielhafte Ansätze zur Verspannungsoptimierung bei der Halterung von Scheibenmodulen beschrieben.

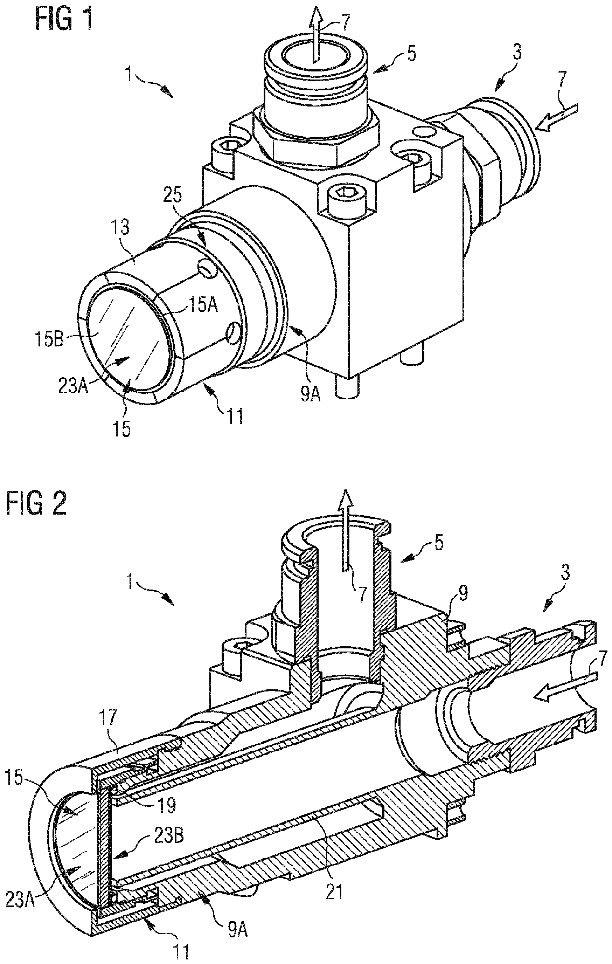

Fig. 1 und Fig. 2 zeigen beispielhaft 3D-Ansichten von Kühlfingern 1, wie sie beispielsweise in Fluid gekühlten Scheibenlasersystemen eingesetzt werden.

Allgemein umfasst der Kühlfinger 1 einen Kühlmitteleinlass 3 und einen Kühlmittelauslass 5 (entsprechende Strömungsrichtungen sind beispielhaft in den Fig. 1 und 2 durch Pfeile 7 gekennzeichnet). Der Kühlfinger 1 weist einen kühlmittelführenden Grundkörper 9 auf, an dem der Einlass 3 und der Auslass 5 angeordnet sind. Ferner weist der Grundkörper 9 einen Rohransatz 9A zum Befestigen eines Laserscheibenträgersystems 11 auf.

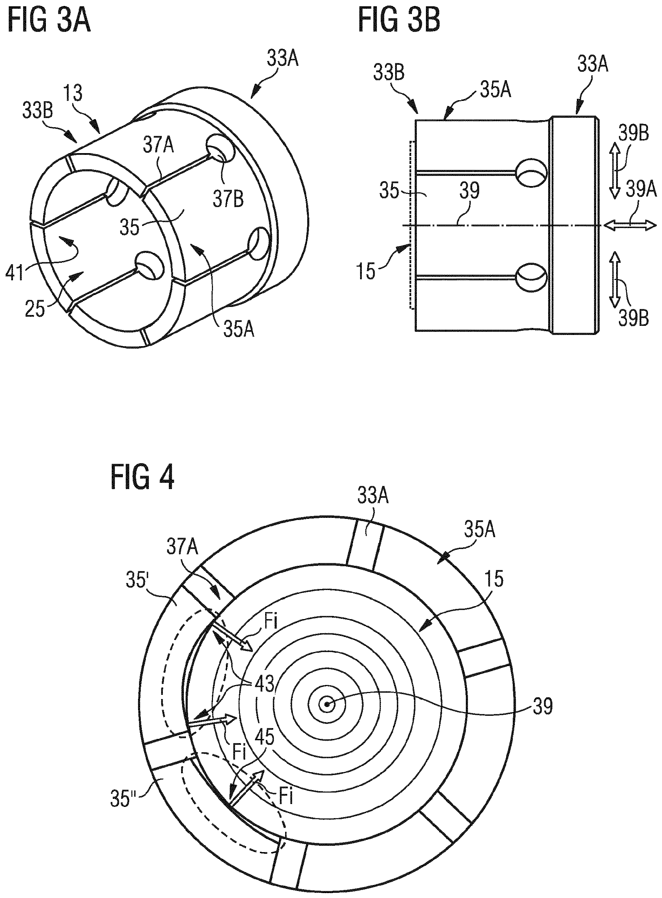

In der Ausführungsform gemäß Fig. 1 weist das Laserscheibenträgersystem 11 eine Radialhalterungsvorrichtung 13 zur Klemmung eines Scheibenmoduls 15 auf. In der Ausfuhrungsform gemäß Fig. 2 weist das Laserscheibenträgersystem 11 eine Radialhalterungsvorrichtung 13 mit einem eingelöteten Scheibenmodul 15 auf. Beispielhafte Ausführungsformen der jeweiligen Radialhalterungsvorrichtung werden in Zusammenhang mit den Fig. 3A bis Fig. 6C sowie Fig. 7A bis 8B näher erläutert

In Fig. 2 sind ferner ein Schirmring 17 als Schutzkappe zum Schutz vor Streulicht sowie ein Dichtring 19 zur Abdichtung des Scheibenmoduls 15 bezüglich des Grundkörpers 9 gezeigt.

Das Scheibenmodul 15 umfasst eine rundscheibenförmige Wärmesenke 15A und eine Laserscheibe 15B. Beispielhafte Maße einer Dicke der Wärmesenke in axialer Richtung können im Bereich von 0,75 mm bis 7 mm, insbesondere im Bereich von 1 mm bis 5 mm, liegen. Beispielhafte Maße eines Durchmessers der Wärmesenke in radialer Richtung können im Bereich von 10 mm bis 30 mm, insbesondere im Bereich von 13 mm bis 25 mm, liegen. Die Laserscheibe 15B weist z.B. Dicken im Bereich von 0,05 mm bis 0,3 mm auf und wird als laseraktives Medium in einem Scheibenlasersystem (nicht gezeigt) zur Emission in einen oder in mehrere Moden des Scheibenlasersystems angeregt. Die Laserscheibe ist beispielsweise ein Festkörper bestehend aus einem laseraktiven Medium mit einem Wirtskristall, der mit einem aktiven Material dotiert ist, z.B. ein Yb:YAG, Yb:YLF, Yb:Lu₂O₃, Yb:LuAG, Yb:CALGO, Nd:YAG oder Nd:YVO4 Kristall.

Üblicherweise umfasst das Scheibenmodul 15 ferner eine HR-Beschichtung (nicht dargestellt) zwischen Laserscheibe 15B und Wärmesenke 15A. Die HR-Beschichtung bildet beispielsweise einen End- oder Faltungsspiegel im Laserwellenlängenbereich des Scheibenlaserresonators. Die Laserscheibe 15B ist z.B. mit einer HR-beschichteten Seite fest mit der Wärmesenke 15A verbunden.

Die durch den optischen Pumpvorgang in die Laserscheibe 15B eingebrachte Wärmeenergie wird über die Wärmesenke 15A und ferner über einen Kühlmittelkreislauf abgeführt. Entsprechend ist die Laserscheibe 15B mechanisch und thermisch mit der Wärmesenke 15A gekoppelt, z. B. durch Kleben, Bonden oder Löten. Sie kann im Betrieb bis zu beispielsweise 300°C warm werden.

Im Folgenden wird die Seite der Wärmesenke, an der die Laserscheibe 15B angeordnet ist, als Vorderseite 23A und die Seite, die dem Kühlmittelstrom ausgesetzt ist, als Rückseite 23B bezeichnet. Die Temperatur der Wärmesenke 15A und insbesondere der Rückseite 23B ist durch den Wärmeaustausch mit dem Kühlmittelstrom deutlich gegenüber der Temperatur der Laserscheibe 15B reduziert.

Wie in Fig. 2 gezeigt, weist der Grundkörper 9 ferner ein Führungsrohr 21 auf, das das Kühlmittel vom Einlass 3 zu der dem Inneren des Grundkörpers 9 zugewandten Rückseite 23B des Scheibenmoduls 15 führt. Zur Kühlung das Scheibenmoduls 15 strömt das Kühlmittel im Betrieb des Scheibenlasersystems kontinuierlich am Ende des Führungsrohrs radial nach außen an der Rückseite 23B entlang, bevor es über den Auslass 5 abgeführt wird.

Wie bereits angedeutet erwärmt sich die Laserscheibe 15B bei beispielsweise einem Pumpleistungseintrag von 10 kW erheblich, so dass aufgrund der Kühlung auf der Rückseite 23B ein entsprechender Temperaturgradient in axialer Richtung aufgebaut wird, d.h. die Temperatur in der Laserscheibe 15B und in der Wärmesenke 15A fällt von der Vorderseite 23A zur Rückseite 23B ab.

Hinsichtlich möglicher Materialspannungen insbesondere im die Laserscheibe 15B bildenden Laserkristall sind zum einen die Wärmeausdehnungskoeffizienten der Laserscheibe 15B und der Wärmesenke 15A zu berücksichtigen. Aufgrund eines Unterschieds in den Wärmeausdehnungskoeffizienten können über die Kontaktierung und die HR-Beschichtung Scherspannungen in der Laserscheibe 15B entstehen. Ferner ist der Randbereich des Scheibenmoduls 15 keiner Pumplaserstrahlung ausgesetzt, so dass der Randbereich kälter bleibt. Entsprechend dehnt sich primär der optisch gepumpte, und dadurch am stärksten erwärmte Zentralbereich aus. Würde die Laserscheibe 15B nicht von der Kontaktierung auf der Wärmesenke 15A gehalten, könnte sie sich beispielsweise axial auswölben. Durch die Befestigung auf der Wärmesenke 15A entstehen in der Kontaktierung und in der HR-Beschichtung Zugspannungen. Auch diese Spannungen müssen im Betrieb so niedrig wie möglich gehalten werden, damit die Kontaktierung und die HR-Beschichtung möglichst nicht beschädigt werden. Allgemein soll die thermisch bedingte Verformung keine unerwünschten Beeinflussungen der betriebenen Lasermode(n) ergeben.

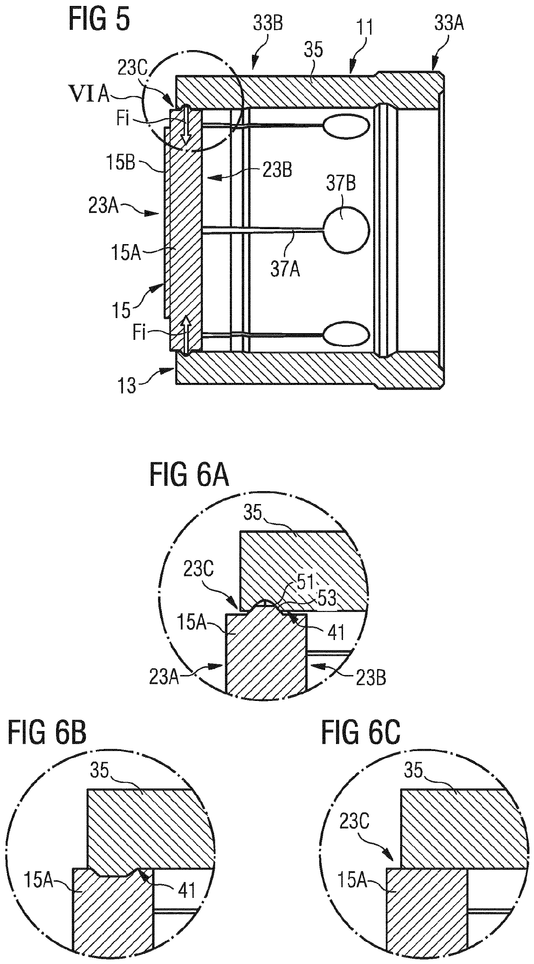

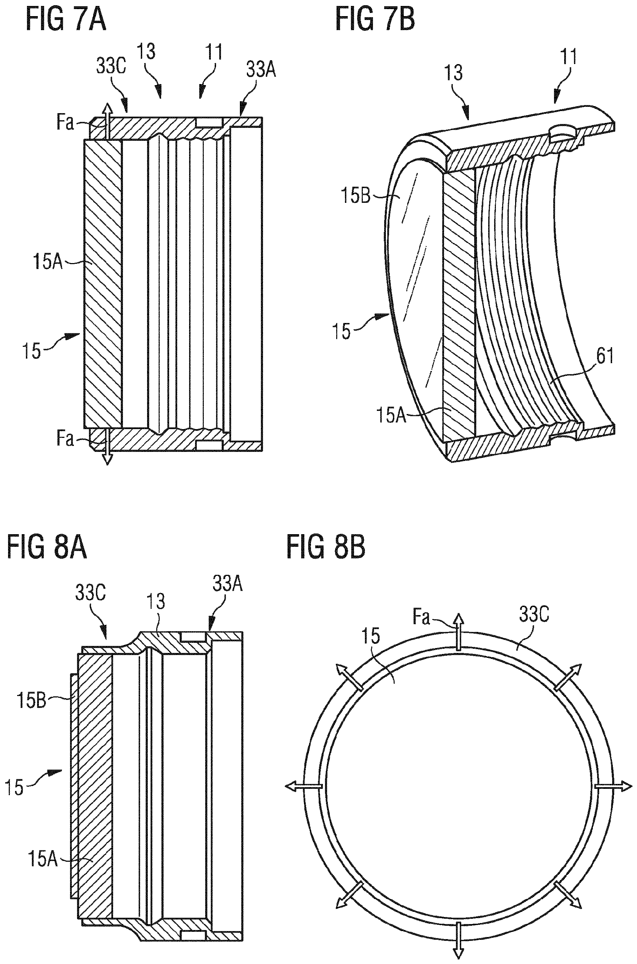

Das Konzept einer radialen Halterung des Scheibenmoduls 15 im Bereich einer die Vorderseite 23A und die Rückseite 23B verbindenden Randfläche 23C (siehe z.B. Fig. 5 und Fig. 7A) ermöglicht ein Halten des Scheibenmoduls 15 in einer Öffnung 25 des Laserscheibenträgersystems 11 (siehe z.B. Fig. 3). Das Konzept einer radialen Halterung des Scheibenmoduls 15 kann beispielsweise auf einer Klemmung und/oder einer Lötung basieren.

Das Laserscheibenträgersystem 11 ist insbesondere derart ausgebildet, dass das Scheibenmodul 15 durch radial wirkende Kräfte, insbesondere radial nach innen oder radial nach außen wirkende Kräfte, gehalten wird. Beispielsweise ist das Laserscheibenträgersystem 11 derart ausgebildet, dass das Scheibenmodul 15 durch weitgehend symmetrische, sich insbesondere im Wesentlichen rotationssymmetrisch oder azimutal verteilt ausbildende, Kräfte gehalten wird. Beispielsweise können die Kräfte kontinuierlich rund um auf die Randfläche 23C einwirken. Alternativ können die Kräfte azimutal lokalisiert und gleich verteilt und/oder paarweise gegenüberliegend auf die Randfläche 23C einwirken.

Im Folgenden werden im Zusammenhang mit den Fig. 3A bis 6C beispielhafte Ausführungsformen einer Radialhalterungsvorrichtung basierend auf Klemmung beschrieben. Im Zusammenhang mit den Fig. 7A, 7B, 8A und 8B werden beispielhafte Ausführungsformen einer Radialhalterungsvorrichtung basierend auf Lötung beschrieben. Dabei weist die Radialhalterungsvorrichtung 13 z.B. einen zylinderförmigen Ringabschnitt auf, der insbesondere ein Innengewinde zum Aufschrauben der Radialhalterungsvorrichtung 13 auf den Rohransatz 9A des Grundkörpers 9 vorsieht.

Die Ausführungsform gemäß Fig. 3A und Fig. 3B verdeutlicht beispielhaft eine radiale Klemmung, die über axiale Spannarme 35 erfolgt.

In Fig. 3A ist eine perspektivische Ansicht einer Radialhalterungsvorrichtung 13 mit einem zylindrischen Ringabschnitt 33A und einem Spannzangenabschnitt 33B gezeigt. Der Spannzangenabschnitt 33B weist sechs Spannarme 35 auf, die an einem Ende am zylindrischen Ringabschnitt 33A befestigt sind und sich hohlzylindersegmentartig axial vom Zylinderringabschnitt 33A weg erstrecken.

In der in Fig. 3A gezeigten Ausführungsform erstrecken sich die Spannarme 35 somit in einem azimutalen Winkelbereich von fast 60° und jeweils benachbarte Spannarme 35 werden durch einen dünnen Spalt 37A voneinander getrennt. Fig. 3A zeigt ferner Aussparungen 37B, in die die Spalte 37A im Bereich des Ringabschnitts 33A übergehen. Die Form und Größe der Spalte 37A und der Aussparungen 37B beeinflussen die Bereitstellung einer entsprechenden Federkraft. Entsprechend werden sie für entsprechend gewünschten Kraftfluss ausgebildet.

Die Spannarme 35 und insbesondere die gesamte Radialhalterung 13 sind beispielsweise aus gehärtetem Edelstahl geformt, um eine entsprechende Federkraft zum Einklemmen des Scheibenmoduls 15 in die Öffnung 25 bereitzustellen. Beispielsweise weisen die Spannarme 35 in radialer Richtung Dicken im Bereich von wenigen Millimetern, beispielsweise 2 mm bis 3 mm auf.

Allerdings hängt die Anzahl der Klemmarme allgemein vom zur Verfügung stehenden Bauraum ab. Weitere Designparameter für die Spannarme hinsichtlich einer axial stabilen Halterung sind die für einen erforderlichen Reibwert benötigte Federkraft (und das damit benötigte Materialvolumen), die für die Pressung zur Verfügung stehende Fläche sowie die Anzahl der Auflagepunkte pro Spannarm 35.

Freie Enden 35A der Spannarme 35 formen die im Wesentlichen runde Öffnung 25. Zum Einbringen des Scheibenmoduls 15 werden die Spannarme 35 beispielsweise über einen Dorn um wenige 100 µm gespreizt, so dass das Scheibenmodul 15 eingebracht und nach Entfernen des Dorns durch die Federkraft der Spannarme 35 gehalten wird.

Fig. 3B zeigt die Radialhalterungsvorrichtung 33 der Fig. 3A in einer Seitenansicht. Gestrichelt ist das eingebrachte Scheibenmoduls 15 angedeutet. Ferner ist die Spreizung der Zwischenräume zwischen den Spannarmen 35 zur Verdeutlichung der Klemmung gezeigt. Eine Mittelachse 39 der Radialhalterung 13 entspricht einem axialen Richtungsverlauf 39A des in der Grundform zylinderarten Laserscheibenträgersystems 11. Ausgehend von der Mittelachse 39 der Radialhalterung 13 sind beispielhaft radiale Richtungsverläufe 39B angedeutet.

Fig. 4 verdeutlicht die Ausbildung einer im Wesentlichen sphärischen Verformung der Laserscheibe 15B sowie zwei beispielhafte Formgebungen einer Innenseite 41 der Spannarme 35 insbesondere im Bereich der freien Enden 35A.

In Fig. 4 wird eine im Rahmen eines FEM-Models bestimmte sphärische Verformung des Scheibenmoduls 15 durch im Wesentlichen rotationssymmetrisch verlaufende, radial nach außen in Anzahl abnehmende Ringe verdeutlicht. Eine derartige symmetrische Verformung ergibt sich z.B. bei einer möglichst weitgehenden Annäherung an eine azimutal gleich verteilte, radial nach innen wirkende Klemmkraftverteilung durch die sechs Spannarme 35.

In der Ausführungsform gemäß Fig. 4 liegen sich jeweils zwei Spannarme 35 bezüglich der Mittelachse 39 der Radialhalterungsvorrichtung 13 gegenüber. Der durch die Innenseite 41 der Spannarme 35 gebildete Öffnungsdurchmesser der Öffnung 25 ist im ungespannten Zustand z.B. um wenige 100 µm geringer als der Außendurchmesser der Wärmesenke 15A des Scheibenmoduls 15. Stimmen die Krümmungsradien im Wesentlichen überein, ergibt sich eine Klemmung, die sich flächig im Wesentlichen über die gesamte Innenseite 41 des Spannarms 35 erstreckt.

Um beispielsweise unabhängig von eventuellen Fertigungstoleranzen der Krümmungsradien zu werden, sind in Fig. 4 zwei beispielhafte Ausführungsformen der Innenseite schematisch für Spannarme 35' und 35" illustriert.

Bezüglich des Spannarms 35' sind zwei azimutal im Randbereich liegende Klemmbereiche 43 angedeutet. Die Ausbildung von diesen zwei Klemmbereichen 43 kann beispielsweise durch das Vorsehen eines kleineren Krümmungsradius auf der Innenseite 41 (im Folgenden als Innenradius bezeichnet) im Vergleich zum Außenradius der Wärmesenke 15A bewirkt werden. Entsprechend bildet sich eine Verteilung von Paaren von Klemmbereichen 43 aus, die jeweils nahe dem Spalt 37A zwischen zwei Spannarmen liegen.

Für den Spannarm 35" ist eine alternative Formgebung der Krümmungsradien gezeigt. Insbesondere ist der Innenradius des Spannarms 35" größer als der Außenradius der Wärmesenke 15B, so dass sich ein beispielsweise bezüglich des jeweiligen Spannarms 35" zentral angeordneter Klemmbereich 45 ausbildet. Wieder unter der Annahme, dass alle Spannarme mit entsprechenden Innenradien ausgebildet werden, ergeben sich azimutal verteilte Klemmbereiche, die jeweils zentral in azimutaler Richtung für jeden Spannarm im Abstand von ca. 60° ausgebildet sind. Im Gegensatz zur Ausführungsform des Spannarms 35' bilden sich basierend auf Spannarm 35" statt zwölf Klemmbereichen nur sechs Klemmbereiche aus, so dass unter Umständen die Federkräfte entsprechend anzupassen sind.

Für beide beispielhafte Ausführungsformen sind in Fig. 4 ferner die nach radial innen gerichtete Spannkräfte Fi für die Klemmbereiche 43 und 45 angedeutet.

Fig. 5 zeigt eine beispielhafte Schnittansicht eines Laserscheibenträgersystems 11 ähnlich der Ausführung in Fig. 3A und 3B. Das Scheibenmodul 15 wird von der Radialhalterungsvorrichtung 13, insbesondere den Spannarmen 35, eingeklemmt. In Fig. 5 ist die Rückseite 23B der Wärmesenke 15A, die dem Kühlwasserstrom ausgesetzt ist, sowie die auf der Vorderseite 23A der Wärmesenke 15A angebrachten Laserscheibe 15B gekennzeichnet. Vorderseite 23A und Rückseite 23B werden durch die radial außen umlaufende Randfläche 23C verbunden. Im Fall einer zylindrischen Grundform der Laserscheibe 15B ist die Randfläche 23C im Wesentlichen eine Zylindermantelfläche.

Aufgrund der Funktionalität des Scheibenmoduls 15 als End- oder Faltungsspiegel in der Laserkavität des Scheibenlasersystems ist eine axial sehr stabile Positionierung des Scheibenmoduls 15 erforderlich. Der Kontaktbereich zwischen Scheibenmodul 15 und Spannzangenabschnitt 33B der Radialhalterungsvorrichtung 13 kann genutzt werden, um ergänzend zur Federkraft eine axiale Positionierung und Fixierung zu bewirken.

Fig. 6A zeigt einen vergrößerten Abschnitt der Schnittansicht im Kontaktbereich. Man erkennt eine (umlaufende) Nut 51 im Spannarm 35 und eine in die Nut 51 eingreifende ringförmige Erhebung 53 auf der Randfläche 23C der Wärmesenke 15A. Ein entsprechendes Einhaken der Erhebung 53 in die Nut 51 fixiert das Scheibenmodul 15 axial.

In Fig. 6B ist eine komplementäre Ausführungsform gezeigt, bei der eine Nut in der Randfläche 23C vorgesehen ist und sich eine ringförmige Erhebung auf der Innenseite 41 des Klemmarms 35 erstrecken, wodurch sich eine axiale Fixierung ergibt.

Fig. 6A und Fig. 6B verdeutlichen Beispiele für die Kombination aus Form- und Reibkraftschluss zwischen Scheibenmodul 15 und Spannarm 35. Um eine langfristige Wanderung des Scheibenmoduls bezüglich der Radialhalterung 33 zu reduzieren bzw. zu verhindern, kann eine zusätzliche axiale Stabilisierung über Formschluss erfolgen. Vorzugsweise sind die entsprechenden Flanken der Oberflächenstrukturen sauber gearbeitet, so dass sich keine wesentlichen Strukturen auf den Flanken ausbilden, die sich mit der Zeit abtragen oder in die Gegenseite eingreifen könnten, wodurch ein Spiel in axialer Richtung entstehen könnte.

Wie in Fig. 6C verdeutlicht kann ferner der Reibschluss zwischen der Randfläche 23C und der Innenseite 41 des Spannarms 35 durch eine entsprechend große plane Flächenpressung erfolgen. Für eine zylindrische Klemmung ist beispielsweise eine möglichst plane Randfläche für eine möglichst flächige Pressung vorgesehen. Beispielsweise kann eine Parallelität der beiden Oberflächen von mindestens 0,001, beispielsweise im Bereich von 0,01 bis 0,02 und eine Durchmesservariation von 0,01 mm bis 0.05 mm der Wärmesenke 15A und analogen Toleranzen für die Innenseiten der Klemmarme verwendet werden. Eine hohe Oberflächengüte bzw. auf die Materialpaarung angepasste Flächenpressung kann es erlauben, Mikrobewegungen zu verhindern (zumindest zu reduzieren), bzw. die Orientierung und Lage des Scheibenmoduls 15 permanent (möglichst über den gesamten Betrieb des Lasersystems) sicherzustellen.

Ein reiner Reibkraftschluss ist insbesondere möglich, wenn eine Reibkraft vorliegt, die viel größer als eine wirkende Axialkraft ist. In einigen Ausführungsformen kann auch für einen reinen Reibkraftschluss die Aufnahme der Wärmesenke, insbesondere die Innenseiten der Klemmarme im entspannten Zustand, rein zylindrisch ausgeführt sein.

Allerdings mag eine reine Flächenpressung zu einer Unsicherheit in der Nulllage führen, falls die rein auf Reibung basierte Halterung eine axiale Fixierung nicht sicherstellt. So kann zusätzlich ein Stoffschluss beispielsweise durch Einbringen eines verbindenden Lötmaterials zwischen Scheibenmodul 15 und Spannarm 35 vorgenommen werden.

Fig. 6C ist somit ein Beispiel für einen reinen Reibkraftschluss (zylindrische Klemmung) bzw. eine zylindrische Klemmung ergänzt über einen zusätzlichen Stoffschluss (Lötung). Dabei verbindet das Lot die Wärmesenke 15A mit den Klemmarmen 35 und ist insbesondere als Lotschicht (nicht explizit in Fig. 6C gezeigt) zwischen der Randfläche 23C der Wärmesenke 15A und den Innenseiten 41 der Klemmarme 35 ausgebildet.

Allgemein kann ein Stoffschluss ergänzend zum Formschluss und/oder Reibkraftschluss eingesetzt werden. So können beispielsweise insbesondere die Innenseite 41 der Klemmarme und die Randfläche 23C mit einem Weichmetall (beispielsweise Gold) beschichtet werden, so dass nach Einbringen des Scheibenmoduls 15 durch Aufbacken ein Stoffschluss ausgebildet werden kann, der das Scheibenmodul 15 und die Radialhalterungsvorrichtung 13 stabil zueinander positioniert.

Neben dem zuvor beschriebenen ergänzenden Einsatz eines Stoffschlusses kann die Befestigung des Scheibenmoduls in der Radialhalterungsvorrichtung auch primär durch Stoffschluss erfolgen. Entsprechende nicht unter die Erfindung fallende Beispiele werden in Zusammenhang mit den Figuren 7A bis 8B erläutert.

Allgemein erfolgt eine Lötung möglichst flächig und umlaufend. Ein beispielhafter Lötwerkstoff ist eine Au-Sn-Legierung. Zur mantelseitigen Verlötung können beispielsweise die Randfläche der Wärmesenke 15A und/oder die Innenseite eines entsprechenden Fassungsabschnitts der Radialhalterungsvorrichtung 13 metallisiert werden. Eine Beschichtung eines die Wärmesenke 15A bildenden Diamanten kann beispielsweise durch Ti, Pt und/oder Au erfolgen. Eine als Löthülse ausgebildete Radialhalterungsvorrichtung kann beispielsweise als Ganzes mit Au beschichtet werden. Eine Beschichtung der Randfläche 23C, beispielsweise mit Ti, Pt, Au, kann sich zumindest auch zum Teil über die Rückseite 23B erstrecken, um diese beispielsweise lichtdicht, vollflächig und abrasionsbeständig zu beschichten. Allgemein wird eine laserseitige Verschmutzung durch Lot wenn möglich vermieden oder nachträglich entfernt.

Insbesondere hinsichtlich einer primär durch Stoffschluss erfolgten Radialhalterungsvorrichtung erfährt die beispielsweise als synthetischer Diamant ausgeführte Wärmesenke 15A eine kleinere thermische Ausdehnung als eine beispielsweise als Kupfer-Buchse ausgeführte Radialhalterungsvorrichtung. Im Laserbetrieb dehnt sich die Kupfer-Buchse entsprechend mehr aus, so dass radial nach außen ziehende Kräfte Fa auf das Scheibenmodul wirken.

Die Fig. 7A und Fig. 7B zeigen ein Beispiel eines Laserscheibenträgersystems 11, die auf einem reinen Stoffschluss zwischen dem Scheibenmodul 15 und der Radialhalterungsvorrichtung 13 basiert. Insbesondere weist dabei Radialhalterungsvorrichtung 13 einen Fassungsabschnitt 33C auf, der in den zylindrischen Ringabschnitt 33A übergeht und die Öffnung zum Einbringen des Scheibenmoduls bereitstellt.

Im Beispiel gemäß Fig. 7A und Fig. 7B ist der Fassungsabschnitt 33C dickwandig ausgeführt, so dass die Lage des Scheibenmoduls 15 im eingelöteten Zustand stabil gehalten wird. D.h., die Dicke (in radialer Richtung) des Fassungsabschnitts 33C ist derart gewählt, dass bei thermischer Erwärmung im Betrieb die gewünschte Verformung erfolgt. Für einen Fassungsabschnitt aus Kupfer ist die Wanddicke z.B. 1,5 mm bis 3 mm.

Ferner erkennt man in Fig. 7B ein im Ringabschnitt 33A vorgesehenes Innengewinde 61 zum Anbringen am Grundkörper des Kühlfingers 1.

In den Fig. 8A und Fig. 8B ist ein weiteres Beispiel eines rein stoffschlussgebundenen Scheibenmoduls 15 gezeigt. Im Bereich des Fassungsabschnitts 33C ist die Hülse dünnwandig ausgeführt, um im erwärmten Zustand minimale bzw. möglichst wenig (Zug-)Kräfte auf das Scheibenmodul 15 auszuüben. Dazu weist der dünnwandige Fassungsabschnitt 33C eine entsprechende Elastizität insbesondere im Übergang zwischen Ringabschnitt 33A und Fassungsabschnitt 33C auf.

Fig. 8B zeigt die im Betrieb, d.h. im erwärmten Zustand des Laserscheibenträgersystems 11, wirkenden radial nach außen gerichtete Kräfte Fa durch Pfeile an. Aufgrund der dünnwandigen Hülse in Fig. 8A sind die radialen Kräfte geringer als in der Ausführungsform der Fig. 7A und Fig. 7B.

## Patentansprüche

1. Laserscheibenträgersystem (11) mit
einem Scheibenmodul (15), das eine rundscheibenförmige Wärmesenke (15A) mit einer Vorderseite (23A), einer Rückseite (23B) und einer die Vorderseite (23A) und die Rückseite (23B) verbindenden Randfläche (23C) und eine auf der Vorderseite (23A) der Wärmesenke (15A) angeordnete Laserscheibe (15B) aufweist, und
einer Radialhalterungsvorrichtung (13) mit einer Öffnung (25) zur Aufnahme des Scheibenmoduls (15), wobei das Scheibenmodul derart in der Radialhalterungsvorrichtung (13) gehalten ist, dass eine Krafteinwirkung in radialer Richtung auf die Randfläche (23C) erfolgt, wobei die Radialhalterungsvorrichtung (13) einen Spannzangenabschnitt (33B) aufweist, der eine Mehrzahl von Spannarmen (35) aufweist, die sich jeweils in axialer Richtung erstrecken und zur Ausbildung einer radial nach innen gerichteten Klemmkraft (Fi) an einem freien Klemmende (35A) ausgebildet sind.

2. Laserscheibenträgersystem (11) nach Anspruch 1, wobei das Scheibenmodul (15) in der Öffnung (25) durch radial wirkende, insbesondere radial nach innen oder radial nach außen wirkende, Kräfte (Fi, Fa)gehalten wird.

3. Laserscheibenträgersystem (11) nach Anspruch 1 oder 2, wobei das Laserscheibenträgersystem (11) derart ausgebildet ist, dass das Scheibenmodul (15) in der Öffnung (25) durch sich im Wesentlichen radialsymmetrisch und/oder azimutal gleichartig verteilt ausbildende Kräfte, insbesondere durch kontinuierlich rundum auf die Randfläche (23C) einwirkende Kräfte oder azimutal lokalisiert und gleichverteilt und/oder paarweise gegenüberliegend auf die Randfläche (23C) wirkende Kräfte, gehalten wird.

4. Laserscheibenträgersystem (11) nach einem der vorhergehenden Ansprüche, wobei die Radialhalterungsvorrichtung (13) einen, insbesondere zylinderförmigen, Ringabschnitt (33A) aufweist, der insbesondere ein Innengewinde (61) zur Befestigung an einem kühlmittelführenden Grundköper (9) eines Kühlfingers (1) aufweist.

5. Laserscheibenträgersystem (11) nach Anspruch 4, wobei die Mehrzahl von Spannarmen (35) an dem Ringabschnitt (33A) angeordnet ist und die Spannarme (35)sich jeweils von dem Ringabschnitt (33A) in axialer Richtung erstrecken und optional zur Ausbildung einer radial nach innen gerichteten Klemmkraft (Fi) in einem oder in mehreren Klemmbereichen (43, 45) ausgebildet sind.

6. Laserscheibenträgersystem (11) nach Anspruch 5, wobei die Spannarme (35) azimutal gleichverteilt am Ringabschnitt (33A) angeordnet sind und/oder
wobei die Spannarme (35) paarweise gegenüberliegend am Ringabschnitt angeordnet sind.

7. Laserscheibenträgersystem (11) nach einem der vorhergehenden Ansprüche, wobei mindestens einer der Spannarme (35) an seinem freien Ende (35A) auf der radial innenliegenden Seite (41) eine Nut oder eine Erhebung aufweist und/oder
wobei mindestens einer der Spannarme (35) als hohlzylindersegmentartig ausgebildet ist und/oder
wobei die Innenseiten (41) der Klemmarme im entspannten Zustand, insbesondere im klemmenden Abschnitt, zylindrisch ausgeführt sind.

8. Laserscheibenträgersystem (11) nach einem der vorhergehenden Ansprüche, wobei die Spannarme (35) und insbesondere die Radialhalterungsvorrichtung (13) aus gehärtetem Edelstahl und/oder die Wärmesenke (15A) ein synthetischer Diamant ist.

9. Laserscheibenträgersystem (11) nach einem der vorhergehenden Ansprüche, wobei ein freies Klemmende (35A) mindestens einer der Spannarme (35) auf einer radial innenliegenden Seite (41) einen Krümmungsradius aufweist, der kleiner oder größer ist als ein Krümmungsradius der Randfläche (23C) der Wärmesenke (15A), insbesondere im kontaktierten Bereich, so dass insbesondere zwei im azimutalen Randbereich des mindestens einen Spannarms (35) angeordnete Klemmbereiche (43) ausgebildet werden bzw. ein azimutal zentral angeordneter Klemmbereich (45) ausgebildet wird.

10. Laserscheibenträgersystem (11) nach einem der vorhergehenden Ansprüche, wobei die Randfläche (23C) zumindest teilweise mit einer radial innenliegenden Seite (41) mindestens eines der Spannarme (35) zusätzlich mit einer einen Stoffschluss erzeugenden Verbindung, insbesondere einer Lötverbindung, verbunden ist.

11. Laserscheibenträgersystem (11) nach einem der vorhergehenden Ansprüche, wobei sich die Randfläche (23C) der Wärmesenke im Wesentlichen in axialer Richtung (39A) und die Vorderseite (23A) und die Rückseite (23B) in radialer Richtung (39B) erstrecken und/oder
wobei die Randfläche (23C) der Wärmesenke (15A) eine Zylinderfläche ist, die im Wesentlichen senkrecht zur Vorderseite (23A) und zur Rückseite (23B) verläuft.

12. Laserscheibenträgersystem (11) nach einem der vorhergehenden Ansprüche, wobei die Randfläche (23C) eine Aussparung oder Erhebung und die Radialhalterungsvorrichtung (13) eine entsprechend gegenüberliegend angeordnete Erhebung oder Aussparung zur axialen Fixierung des Scheibenmoduls (15) in der Radialhalterungsvorrichtung (13) aufweisen und/oder
wobei die Randfläche (23C) eine Parallelität von mindestens 0,001 und Toleranzen im Mittendurchmesser von maximal 0,01 mm bis 0,05 mm aufweist.

13. Laserscheibenträgersystem (11) nach einem der vorhergehenden Ansprüche, wobei das Scheibenmodul (15) zwischen Laserscheibe (15B) und Wärmesenke (15A) eine Laserstrahlung reflektierende Schicht aufweist.

14. Kühlfinger (1) für ein Scheibenlasersystem mit
einem Kühlfingergrundkörper (9) und
einem an dem Kühlfingergrundkörper (9) befestigten Laserscheibenträgersystem (11) nach einem der vorhergehenden Ansprüche.

15. Kühlfinger (1) nach Anspruch 14, wobei der Kühlfingergrundkörper (9) zum Aufschrauben des Laserscheibenträgersystem (11) ausgebildet ist, und/oder
wobei der Kühlfingergrundkörper (9) dazu ausgebildet es, einen die Rückseite (23B) der Wärmesenke (15A) anströmenden Kühlmittelstrom bereitzustellen.

## Claims

1. A laser disk mounting system (11) comprising:
a disk module (15) having a round disk-shaped heat sink (15A) having a front side (23A), a rear side (23B) and an edge surface (23C) connecting the front side (23A) and the rear side (23B), and a laser disk (15B) arranged on the front side (23A) of the heat sink (15A); and
a radial mounting device (13) having an opening (25) for receiving the disk module (15), wherein the disk module is mounted in the radial mounting device (13) such that a force is applied in a radial direction on the edge surface (23C), wherein the radial mounting device (13) comprises a collet chuck section (33B) having a plurality of clamping arms (35) respectively extending in axial direction and configured for generating a radially inwardly directed clamping force (Fi) at a free clamping end (35A).

2. The laser disk mounting system (11) according to claim 1, wherein the disk module (15) is held in the opening (25) by radially acting forces (Fi, Fa), in particular forces acting radially inwards or radially outwards.

3. The laser disk mounting system (11) according to claim 1 or 2, wherein the laser disk mounting system (11) is configured such that the disk module (15) is held in the opening (25) by forces generated substantially radially symmetrically and/or azimuthally uniformly distributed, in particular by forces acting continuously all around on the edge surface (23C) or by forces acting azimuthally localized and uniformly distributed and/or pairwise on opposite sides on the edge surface (23C).

4. The laser disk mounting system (11) according to one of the preceding claims, wherein the radial mounting device (13) comprises a ring section (33A), which in particular has a cylindrical form, and the ring section (33A) has in particular an internal thread (61) for attachment to a coolant-guiding base body (9) of a cooling finger (1).

5. The laser disk mounting system (11) according to claim 4, wherein the plurality of clamping arms (35) is arranged on the ring section (33A), and the clamping arms (35) respectively extend in axial direction, and are optionally configured for generating a radially inwardly directed clamping force (Fi) in one or more clamp areas (43, 45).

6. The laser disk mounting system (11) according to claim 5, wherein the clamping arms (35) are arranged azimuthally uniformly distributed on the ring section (33A), and/or
wherein the clamping arms (35) are arranged pairwise opposite to each other on the ring section.

7. The laser disk mounting system (11) according to one of the preceding claims,
wherein at least one of the clamping arms (35) has a groove or a rising at its free end (35A) on the radially inner surface (41), and/or
wherein at least one of the clamping arms (35) is configured in the manner of a hollow cylinder, and/or
wherein the inner surfaces (41) of the clamping arms have a cylindrical shape in the relaxed state, in particular in the clamping section.

8. The laser disk mounting system (11) according to one of the preceding claims,
wherein the clamping arms (35) and, in particular, the radial mounting device (13) is made of hardened stainless steel and/or the heat sink (15A) is made of a synthetic diamond.

9. The laser disk mounting system (11) according to one of the preceding claims, wherein a free clamping end (35A) of at least one of the clamping arms (35) on a radially inner surface (41) has a radius of curvature that is smaller or larger than a radius of curvature of the edge surface (23C) of the heat sink (15A), in particular in the contacted region, so that there are formed in particular two clamping regions (43), which are arranged in the azimuthal edge region of the at least one clamping arm (35), or one clamping region (45), which is azimuthally centrally arranged.

10. The laser disk mounting system (11) according to one of the preceding claims, wherein the edge surface (23C) is additionally at least partly connected to a radially inner surfaces (41) of at least one of the clamping arms (35) with a connection producing material closure, in particular a soldered connection.

11. The laser disk mounting system (11) according to one of the preceding claims, wherein the edge surface (23C) of the heat sink extends essentially in axial direction (39A), and the front side (23A) and the rear side (23B) extend in radial direction (39B), and/or
wherein the edge surface (23C) of the heat sink (15A) is a cylindrical surface that extends essentially perpendicular to the front side (23A) and the rear side (23B).

12. The laser disk mounting system (11) according to one of the preceding claims,
wherein the edge surface (23C) has a recess or a rising, and the radial mounting device (13) has a correspondingly opposite arranged rising or recess for axial fixation of the disk module (15) in the radial mounting device (13), and/or
wherein the edge surface (23C) provides a parallelism of at least 0.001 and tolerances in the mean diameter of at most 0.01 mm to 0.05 mm.

13. The laser disk mounting system (11) according to one of the preceding claims,
wherein the disk module (15) comprises a laser radiation reflecting layer between the laser disk (15B) and the heat sink (15A).

14. A cooling finger (1) for a disk laser system comprising:
a cooling finger base body (9); and
a laser disk mounting system (11) according to one of the preceding claims attached to the cooling finger base body (9).

15. The cooling finger (1) according to claim 14, wherein the cooling finger base body (9) is configured for screwing on the laser disk mounting system (11), and/or
wherein the cooling finger base body (9) is configured to provide a coolant flow flowing to the rear side (23B) of the heat sink (15A).

## Revendications

1. Système de support de tranche laser (11) avec
- un module de tranche (15) qui comporte un dissipateur thermique (15A) en forme de disque avec une face avant (23A), avec une face arrière (23B) et avec un bord (23C) reliant la face avant (23A) et la face arrière (23B) et une tranche laser (15B) agencée sur la face avant (23A) du dissipateur thermique (15A), et
- un dispositif de maintien radial (13) avec une ouverture (25) destinée au logement du module de tranche (15), dans lequel le module de tranche est maintenu de telle manière dans le dispositif de maintien radial (13) qu'une force agit en direction radiale sur le bord (23C), dans lequel le dispositif de maintien radial (13) comporte une partie de pince de serrage (33B) qui comporte une multiplicité de bras de serrage (35) qui s'étendent à chaque fois dans la direction axiale et qui sont conçus pour créer une force de serrage (Fi), dirigée de façon radiale vers l'intérieur, au niveau d'une extrémité de serrage (35A) libre.

2. Système de support de tranche laser (11) selon la revendication 1, dans lequel le module de tranche (15) est maintenu dans l'ouverture (25) par des forces (Fi, Fa) qui ont une action radiale, en particulier une action radiale vers l'intérieur ou une action radiale vers l'extérieur.

3. Système de support de tranche laser (11) selon la revendication 1 ou 2, dans lequel le système de support de tranche laser (11) est conçu de telle sorte que le module de tranche (15) est maintenu dans l'ouverture (25) par des forces réparties sensiblement uniformément de manière de façon radiale symétrique et/ou azimutale, en particulier par des forces qui agissent de manière continue sur tout le pourtour du bord (23C) ou par des forces qui agissent sur le bord (23C) de manière régulièrement répartie et localisée au niveau azimutal et/ou deux par deux face à face.

4. Système de support de tranche laser (11) selon l'une quelconque des revendications précédentes, dans lequel le dispositif de maintien radial (13) comporte une partie annulaire (33A), en particulier de forme cylindrique, qui comporte en particulier un filet femelle (61) destiné à la fixation à un corps de base (9), conducteur de fluide de refroidissement, d'un doigt de refroidissement (1).

5. Système de support de tranche laser (11) selon la revendication 4, dans lequel les multiples bras de serrage (35) sont agencés au niveau de la partie annulaire (33A) et les bras de serrage (35) s'étendent à chaque fois de la partie annulaire (33A) dans la direction axiale et sont conçus optionnellement pour créer une force de serrage (Fi) dirigée de façon radiale vers l'intérieur dans une ou plusieurs zones de serrage (43, 45).

6. Système de support de tranche laser (11) selon la revendication 5, dans lequel les bras de serrage (35) sont agencés répartis régulièrement de manière azimutale au niveau de la partie annulaire (33A) et/ou
dans lequel les bras de serrage (35) sont agencés deux par deux face à face au niveau de la partie annulaire.

7. Système de support de tranche laser (11) selon l'une quelconque des revendications précédentes, dans lequel au moins un des bras de serrage (35) comporte au niveau de son extrémité libre (35A) une rainure ou une bosse sur le côté (41) de façon radiale à l'intérieur et/ou
dans lequel au moins un des bras de serrage (35) est conçu comme un segment de cylindre creux et/ou
dans lequel les côtés intérieurs (41) des bras de serrage sont réalisés cylindriques à l'état relâché, en particulier dans la partie qui serre.

8. Système de support de tranche laser (11) selon l'une quelconque des revendications précédentes, dans lequel les bras de serrage (35) et en particulier le dispositif de maintien radial (13) sont en acier spécial trempé et/ou le dissipateur thermique (15A) est un diamant synthétique.

9. Système de support de tranche laser (11) selon l'une quelconque des revendications précédentes, dans lequel une extrémité de serrage (35A) libre d'au moins un des bras de serrage (35) présente sur un côté de façon radiale intérieur (41) un rayon de courbure qui est plus petit ou plus grand qu'un rayon de courbure du bord (23C) du dissipateur thermique (15A), en particulier dans la zone de contact, de manière à réaliser en particulier deux zones de serrage (43) agencées dans la zone de bord azimutale de l'au moins un bras de serrage (35) ou une zone de serrage (45) agencée de manière azimutale et centrale.

10. Système de support de tranche laser (11) selon l'une quelconque des revendications précédentes, dans lequel le bord (23C) est assemblé au moins en partie à un côté de façon radiale intérieur (41) d'au moins un des bras de serrage (35) en plus avec un assemblage produisant une liaison de matière, en particulier un assemblage par brasage.

11. Système de support de tranche laser (11) selon l'une quelconque des revendications précédentes, dans lequel le bord (23C) du dissipateur thermique s'étend globalement dans la direction axiale (39A) et la face avant (23A) et la face arrière (23B) s'étendent dans la direction radiale (39B) et/ou
dans lequel le bord (23C) du dissipateur thermique (15A) est une surface cylindrique qui s'étend globalement perpendiculairement à la face avant (23A) et à la face arrière (23B).

12. Système de support de tranche laser (11) selon l'une quelconque des revendications précédentes, dans lequel le bord (23C) comporte un évidement ou une bosse et le dispositif de maintien radial (13) comporte une bosse ou un évidement agencé respectivement en face afin de fixer de façon axiale le module de tranche (15) dans le dispositif de maintien radial (13) et/ou
dans lequel le bord (23C) présente un parallélisme d'au moins 0,001 et des tolérances dans le diamètre médian au maximum de 0,01 mm à 0,05 mm.

13. Système de support de tranche laser (11) selon l'une quelconque des revendications précédentes, dans lequel le module de tranche (15) comporte, entre la tranche laser (15B) et le dissipateur thermique (15A), une couche réfléchissant un rayonnement laser.

14. Doigt de refroidissement (1) pour un système de tranche laser avec
- un corps de base de doigt de refroidissement (9) et
- un système de support de tranche laser (11) selon l'une quelconque des revendications précédentes fixé au corps de base de doigt de refroidissement (9).

15. Doigt de refroidissement (1) selon la revendication 14, dans lequel le corps de base de doigt de refroidissement (9) est conçu pour visser le système de support de tranche laser (11) et/ou
dans lequel le corps de base de doigt de refroidissement (9) est conçu pour fournir un flux de fluide de refroidissement affluant au niveau de la face arrière (23B) du dissipateur thermique (15A).
